# EUROPEAN PATENT APPLICATION

(11) **EP 2 259 195 A1**
(43) Date of publication of application: **08.12.2010**
(21) Application number: 09716076.6
(22) Date of filing: 25.02.2009
(51) Int. Cl.: G06F 17/20

(54) **METHOD AND DEVICE OF DEALING WITH DOCUMENTS MEETING THE DOCUMENT DATABASE STANDARD**

(30) Priority: 25.02.2008 CN 200810100890
(71) Applicant: Sursen Corp., Beijing 100089 (CN)
(72) Inventor: WANG, Donglin, Beijing 100089 (CN)
(74) Representative: Charles, Glyndwr
(86) International application number: PCT/CN2009/070526
(87) International publication number: WO 2009/105994

(57) **Abstract**

The present invention discloses a method and an apparatus for processing a document conforming to a docbase standard. The method includes: obtaining contents of a document conforming to a docbase standard via a docbase standard interface; generating an interim document based on the contents of the document; and providing the interim document for a third-party software for displaying; wherein the interim document is in a format supported by the third-party software.

## Description

### Field of the Invention

The present invention relates to docbase management system techniques, and particularly, to a method and apparatus for processing a document conforming to a docbase standard.

### Backgound of the invention

A docbase management system is a kind of platform software. It is a complicated software system providing basic functions for processing unstructured document (also referred to as unstructured data, unstructured information). The basic functions include creating, storing, reading and writing, parsing, presenting, organizing, managing, security controlling, searching and so on. The docbase management system also provides a standard interface for application software to invoke. The standard interface is referred to as a docbase standard interface or a standard interface of the docbase management system, and the standard of the standard interface is referred to as the docbase standard. Data stored in the docbase management system is referred to as a docbase, i.e. data accessible via the docbase standard interface. The data can also be referred to as a document conforming to the docbase standard, i.e., the storage format of the document is supported by software conforming to the docbase standard. A previous patent application CN1979478 of the applicant provides a document processing system including a docbase management system, a storage and an application software. Data of the docbase management system is stored in the storage. The docbase management system and the application software are communicatively connected to each other through a docbase standard interface. The standard interface may be defined based on pre-defined actions and objects or defined in other manners. All operations that can be done on a document by the application software are uniformed into operations on a pre-defined universal document model. The standard interface provides different operation functions on the document. The application software sends instructions to the docbase management system through invoking the standard interface, and the docbase management system performs corresponding operations on the document stored in the storage according to the instructions of the application software.

Currently, widely-used document editing software only supports one or several traditional document formats. The above document editing software is referred to as third-party software herein. Existing third-party software is unable to directly open a document conforming to the docbase standard (e.g. an Unstructured Operation Markup Language (UOML) document), and also unable to process the document, such as editing, saving and so on.

In order to enable the third-party software to process a document conforming to the docbase standard, a solution is to totally re-develop the third-party software to enable the third-party software to support the document conforming to a docbase standard (e.g. a UOML document). But this solution requires cooperation of vendors of the third-party software.

### Summary of the Invention

Therefore, the present invention provides a method for processing a document conforming to the docbase standard, so as to enable third-party software to process the document conforming to the docbase standard.

In view of the above, technical schemes provided by the present invention are as follows.

A method for processing a document conforming to a docbase standard, comprising:
obtaining contents of a document conforming to a docbase standard via a docbase standard interface;
generating an interim document based on the contents of the document; and providing the interim document for a third-party software for display;
   wherein the interim document is in a format supported by the third-party software.

An apparatus for processing a document conforming to a docbase standard, comprising:
a first module, adapted to obtain contents of a document conforming to a docbase standard via a docbase standard interface;
a second module, adapted to generate an interim document based on the contents of the document; and; ;
a third module, adapted to provide the interim document for a third-party software for displaying.
   wherein the interim document is in a format supported by the third-party software.It can be seen from the above that, when the third-party software opens a document conforming to a docbase standard, the apparatus provided by the present invention may invoke a docbase standard interface to parse the original document, obtain contents of the original document, and generate an interim document based on the contents obtained and provide the interim document to the third-party software for displaying. The interim document conforms to a format supported by the third-party software. As such, the third-party software is enabled to recognize the interim document and converted contents in the interim document. Therefore, after opening the interim document, the third-party software can display the converted contents to present the contents of the original document. As described above, the third-party software can process the original document with aid of a plug-in, thus implements processing of a document conforming to a docbase standard without cooperation of a vendor of the third-party software.

### Brief Description of the Drawings

FIG.1 is a flowchart illustrating a method for processing a document conforming to a docbase standard by third-party software according to an embodiment of the present invention.
FIG.2 is a flowchart illustrating a detailed method for processing a document conforming to a docbase standard by third-party software according to an embodiment of the present invention.

### Detailed Description of the Invention

The present invention will be described in detail hereinafter with reference to accompanying drawings and embodiments to make the technical solution and merits therein clearer.

The basic idea of the present invention lies in that, when being informed that third-party software needs to open a document which conforms to a docbase standard, software which supports the docbase standard converts the format of the document into a format supported by the third-party software and provides the converted document for being processed by the third-party software.

The software may be a plug-in, a controller or a set of independent application software pre-configured in the third-party software. For facilitating description, the document conforming to the docbase standard which is to be processed by the third-party software is referred to as an original document, and a docbase standard interface is referred to as a standard interface.

The method provided by an embodiment of the present invention may include: obtaining contents of an original document via a standard interface, generating an interim document, and providing the interim document for a third-party software to display, wherein the format of the interim document is supported by the third-party software.

The apparatus provided by an embodiment of the present invention may include: a first module, adapted to obtain contents of an original document via a standard interface; a second module, adapted to generate an interim document; and a third module, adapted to provide the interim document for a third-party software to display; wherein the format of the interim document is supported by the third-party software. The apparatus may further include a fourth module, adapted to save, after the interim document is edited by the third-party software, contents edited into the original document via the standard interface, and a fifth module, adapted to embed the interim document edited into the original document, or embed contents edited in the interim document into the original document in the format of the interim document.

The present invention will be described hereinafter by taking setting a plug-in in a third-party software as an example. Those skilled in the art should know that other manners may also be used for implementing the present invention by make moderate modifications to the following embodiment.

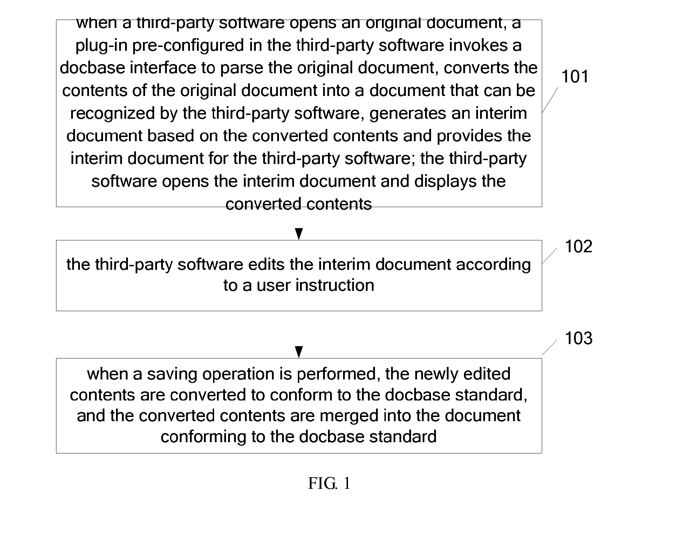

FIG.1 is a flowchart illustrating a method for processing a document conforming to the docbase standard by a third-party software. As shown in FIG.1, the method may include the steps as follows.

In step 101, when a third-party software opens an original document, a plug-in which is pre-configured in the third-party software and supports the docbase standard obtains contents of the original document and generates an interim document according to the contents obtained. The format of the interim document is supported by the third-party software. The third-party software opens the interim document and displays the contents converted. The process of obtaining the contents of the original document and generating the interim document may include: the plug-in invokes a standard interface to parse the original document, converts the contents of the original document into contents that can be recognized by the third-party software, and generates the interim document based on the contents converted; or the plug-in invokes the standard interface to directly obtain contents of the original document, whose format is supported by the third-party software.

The plug-in supporting the docbase standard refers to a plug-in program capable of invoking the docbase standard interface. The standard interface may be invoked by issuing an instruction string, e.g. "<UOML_INSERT (OBJ=PAGE, PARENT=123.456.789, POS=3)/>", to the docbase management system. The instruction string can be generated according to a pre-defined standard format. The standard interface may also be some interface functions having standard names and parameters, e.g. "BOOL UOI_InsertPage (UOI_Doc *pDoc, int nPage)", and invoking such standard interface by the plug-in can be through issuing a standard instruction defined by the interface function to the docbase management system.

The design and development of the plug-in is independent from that of the third-party software, as long as the plug-in is able to interact with the third-party software through a plug-in interface provided by the third-party software. For example, when needing to open a document conforming to the docbase standard, a third-party software may trigger the plug-in via the plug-in interface of the third-party software to obtain and parse the document.

This step realizes operations of opening and displaying the original document in the third-party software. the pre-configured plug-in firstly invokes a docbase standard interface to parse the original document, converts the original document into contents that can be recognized by the third-party software, then creates an interim document for storing the contents converted. The format of the interim document is supported by the third-party software. Therefore, the third-party software is able to open the interim document and display the contents converted, thereby displaying the contents of the original document. The displaying operation may be implemented by object linking and embedding or by directly converting the contents into imaged for display.

After the original document is displayed, preferably, if the third-party software has editing functions, it may edit and save the document according to user instructions. Specifically, the following steps may be performed.

In step 102, the third-party software edits the interim document according to a user instruction.

In this step, the third-party software may perform various editing operations on the interim document, including text editing, graphics editing and image editing.

In step 103, when saving the interim document, the third-party software triggers the plug-in via the plug-in interface to convert the contents edited to conform to the docbase standard and then to add the contents converted into the original document. Herein, the process of the third-party software triggering the plug-in is similar to that for opening the document.

In this step, when saving the edited document, the contents edited are converted into the format conforming to the docbase standard, then the converted contents are added into the original document, so as to form an edited document conforming to the docbase standard.

As described above, the method of the present invention makes it possible for the third-party software to process, including opening, editing and saving, the document conforming to the docbase standard.

Hereinafter, the method of the present invention will be described with reference to an embodiment. In the following embodiment, UOML is taken as an exemplary docbase standard.

UOML is a detailed docbase standard having been proposed currently. It includes a series of standards defined by UOML technical committee of Organization for the Advancement of Structured Information Standards (OASIS), and is also an industry standard with No. S07020-T approved by China Information Industry Ministry. The UOML standard provides an interoperable manner to reduce development costs and information exchanging costs of enterprises. The UOML is a document processing language based on XML, and is platform-irrelevant, programming language-irrelevant and application-irrelevant. It defines universal functions for processing documents and abstracts operations on fixed-layout files. An UOML document refers to a document that can be accessed via the UOML standard, and is short for UOML-accessible document.

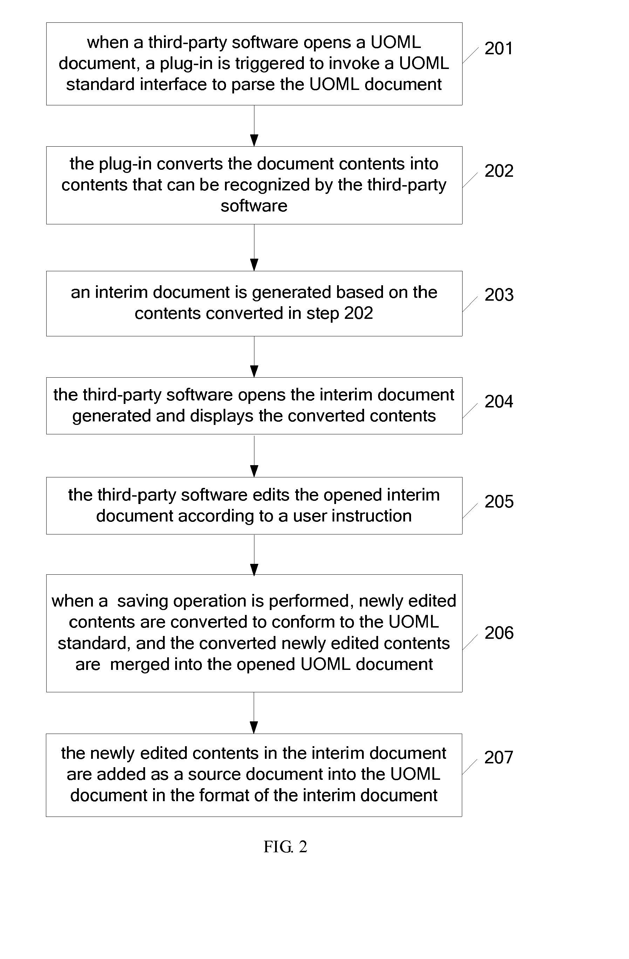

FIG.2 is a flowchart illustrating a detailed method for processing a document conforming to a docbase standard by a third-party software according to an embodiment of the present invention. In order to implement various operations on an original document, a docbase management system supporting the docbase standard should be installed. The docbase management system may be implemented in various manners, e.g. adopting a stand-alone docbase management system or a server docbase management system, and the implementation manner adopted is not restricted herein.

As shown in FIG.2, the method may include the steps as follows.

In step 201, when a third-party software opens an original document, a plug-in is triggered to invoke a docbase standard interface to parse the original document.

The plug-in is a program developed in advance for implementing operations such as conversion between a third-party software-supported document and the original document. It interacts with the third-party software through a plug-in interface provided by the third-party software. Before being used, the plug-in needs to be configured in the third-party software. The third-party software triggers the plug-in to start work by issuing an instruction for opening the original document.

That the plug-in supports the docbase standard means the plug-in can invoke a docbase standard interface to parse the original document. For example, the plug-in may firstly invoke a UOML standard interface for verifying document format so as to determine whether the original document to be opened is a UOML document. If the original document is not a UOML document, an error prompt will be provided. If the original document is a UOML document, a standard interface for parsing document will be invoked to parse contents of the original document.

In the above, the method described in the patent application with a publication number of CN 1979487 may be adopted for invoking the UOML standard interfaces.

In step 202, the plug-in converts the contents of the original document into contents that can be recognized by the third-party software.

As described above, in order to display the original document, an object embedding manner can be adopted, i.e., the contents of the original document is stored as one or more objects to be embedded in an interim document. Or, an image display manner can be adopted, i.e., the contents of the original document is converted into one or more images to be stored into the interim document.

Storing the contents of the original document into the interim document as the embedded objects may be implemented by an object linking and embedding technique, or by a direct data embedding method, etc. The object linking and embedding technique supports displaying, in a document of a certain format, contents in another format, i.e., embedding, into the document of a certain format, the contents in another format by means of linking.

Since there are the above two different manners, the converted contents in this step may also be divided into two categories: embedded objects and image objects. Herein, the embedded objects can be generated and parsed by the docbase management system.

When the object embedding technique is adopted, the converted objects may vary according to operation platforms. Generally, document contents will be converted into Object Linking and Embedding (OLE) objects in a Windows platform, Kpart objects in a Kool Desktop Environment (KDE) platform, and BABOON objects in a GNU Network Object Model Environment (Gnome) platform. According to the object linking and embedding technique, different operation platforms have the same converting procedure. Herein, the detailed converting procedure will be described by taking converting document contents into OLE objects in a Windows platform as an example. The procedure may include: a plug-in generates one or more OLE objects by converting the contents of the document parsed in step 201. E.g. the contents in each page of a UOML document is converted into an OLE object, and then information of the contents parsed is stored into the OLE object. Preferably, the OLE object may further store information of software which parses the OLE object, e.g. information of the docbase management system, or an identifier of an application software capable of parsing and displaying documents conforming to the docbase standard, and so on.

Specifically, the information of the parsed contents stored in the OLE object may be various types of information, e.g. position information of the document contents, data of the page or a compressed package of the document contents, etc.

Storing the position information of the document contents in the OLE object is to insert a link of the document contents, e.g. a link to a document name and a page number, for specifying the location of the document contents in the OLE object. When the third-party software needs to display the contents of the OLE object, it may invoke a software capable of displaying the document conforming to the docbase standard (e.g. a UOML reader, hereinafter referred to as a presentation software) to obtain data of the document contents according to the link, parse the data and display the parsed document contents on a display position designated by the third-party software. The parsing of the data performed by the presentation software may be implemented by invoking a docbase management system.

Storing page data into an OLE object is to directly embed data of the document contents into the OLE object. When needing to display the contents of the OLE object, the third-party software may invoke the presentation software to parse the data, and display the parsed document contents on a display position designated by the third-party software. The presentation software may implement the above parsing operation by invoking a docbase management system.

Storing a compressed package information of compressed document contents into an OLE object is to compress the data of the document contents and store the compressed data into the OLE object, which reduces the size of the OLE object and thus reduces the size of the interim document. When the OLE object is to be displayed, the compressed package is firstly de-compressed, then the presentation software is invoked to parse and display the data obtained by de-compressing. The presentation software may implement the parsing operation by invoking the docbase management system.

When the image display manner is adopted, layout information of a relevant portion of the document is obtained in this step via the docbase standard interface. Then, the layout information is recorded in an image, i.e. the layout information is stored as an image, and then the image is stored in the interim document, e.g., contents in a page of the original document may be converted into one image. For example, the plug-in may obtain a layout bitmap in a designated bitmap format for a specified page, i.e. a bitmap having the same presentation effect of the page, through an instruction for obtaining layout bitmap. There is no need to parse and process each layout object. In other words, the plug-in may directly obtain an exact layout bitmap without retrieving each layout object on the page and analyzing the meaning of the object and presenting the object on the layout. Thus, the plug-in utilizes the layout bitmap obtained to form the interim document in a format supported by the third-party software.

Specifically, during the above converting procedure, each page of the original document may be converted according to the methods described above.

Through this step, the document contents of the original document have been converted into contents in a format that could be recognized by the third-party software. Since the document contents are processed by the third-party software in a unit of document, the converted object should be saved in a document for being processed by the third-party software.

In this step, the plug-in may preferably obtain layer information or edition information of a document from the docbase. Each page of the document may include multiple layers and each layer may be edited by a different user. A user may need to process one or several of the layers, while other layers are kept invisible to the user. Or, a user may need to process a certain edition of the document, i.e. contents of the document saved by a certain user on a certain occasion. Thus, the plug-in may display information of all layers or information of all editions to the user. For example, it is possible to display the saving time, the user who carries out the saving, or content abstract, of each layer or each edition of the document so that the user can select a layer or edition required. Then the contents of the selected layer or edition of the document are converted to generate contents recognizable for the third-party software.

In step 203, an interim document is generated based on the converted contents in step 202.

The format of the interim document generated in this step is supported by the third-party software. Generally, the following formats may be adopted: Rich Text Format (RTF), Open Document Format (ODF), Unified Office document Format (UOF) and OpenXML format. The above formats may be adopted by the interim document for their universalities, but other formats may also be adopted as long as they are supported by the third-party software.

Take the RTF as an example. The detailed method for generating an interim document may be as follows: creating a document in the RTF format (referred to as an RTF document hereinafter for short), inserting all contents into the RTF document according to interrelationships among the positions of the contents converted in step 202. For example, in step 202, document contents on each page are converted into an OLE object, thus in this step, the OLE object converted from the document contents on the first page is inserted at the beginning of the RTF document, and then OLE objects converted from document contents on other pages are inserted subsequently.

In step 204, the plug-in provides the interim document for the third-party software. The third-party software opens the interim document and displays the converted objects.

Since the format of the interim document is supported by the third-party software, the third-party software is able to open the interim document. When displaying the objects in the interim document, different display manners may be adopted for different types of objects.

Specifically, if the object embedding manner is adopted, the converted contents are objects for object linking and embedding such as the OLE objects. The following takes the OLE object as an example to explain the display of this kind of object. The display procedure may include: invoking a software which is able to parse and display a docbase standard document when an OLE object is to be displayed, obtaining layout information of document contents corresponding to the OLE object, displaying and/or printing the document contents. When invoking a docbase standard interface, if the OLE object includes information of a presentation software, the presentation software may be invoked according to the information to parse and display the document contents stored in the OLE object. Specifically, when displaying the document contents according to content information stored in the OLE object, document contents corresponding to the content information may be retrieved according to the manner adopted in step 202 for storing information of the document contents. For example, if the OLE object stores the position information, i.e., a link to a document name and page number of the document contents is stored in step 202, when displaying the document contents, the presentation software finds out the location of the document contents to be displayed based on the link to the document name and the page number, parses and displays the data of the page corresponding to the OLE object. The presentation software may implement the parsing operation by invoking a docbase management system.

If the image display manner is adopted, the converted contents are images, e.g. layout bitmaps. When displaying the converted contents, the third-party directly paints the document contents according to the image data stored.

Both the above two manners can be adopted for the display of the document contents. When the object linking and embedding manner is adopted, the converted objects require less storage space, but the software capable of displaying the original document, i.e. the presentation software, is required in the system. When the image displaying manner is adopted, there will be a large amount of data after the conversion, which may occupy mass storage space, but the above presentation software, e.g. UOML reader, is not required, and the object data can be displayed directly.

Through the steps 201 to 204, functions of opening and displaying the original document in the third-party software can be implemented. Implementation of functions such as editing and saving the original document opened by the third-party software will be described in detail hereinafter.

In step 205, the third-party software edits the interim document according to a user instruction.

The third-party software edits the interim document, e.g. adds a new character or a new diagram, according to an instruction inputted by a user through a mouse or a keyboard and so on. The new contents edited may be appended above the converted contents (e.g. the OLE object), or after all the converted contents. Taking each page being an OLE object or an image as an example, when the editing generates new contents, the third-party software may generate an object for each page, or generate an object for the whole interim document with the object including a sub-object for each page of the interim document. When the new contents are appended above the converted contents, the editing is performed on an object newly generated for the edited page of the interim document. As for pages where there are no new contents, the objects newly generated for those pages of the interim document remain empty, i.e. there are no contents. Those skilled in the art should be aware that, the above is merely an example. There are various manners for storing the newly edited contents, and different third-party software may adopt different manners.

In order to ensure that the contents of the original document opened will not be modified, the interim document generated can be set as modification prohibited and/or deletion prohibited. Preferably, attributes of the converted objects can be configured in such a manner that modifications by the third-party software to the converted objects will be rejected. For example, the attribute of an embedded object or an image in the interim document may be set as locked, which makes the third-party software unable to delete an OLE object or an image object, to change the size of the OLE object or the image object, and to insert new contents between two objects.

In step 206, when the third-party software performs a saving operation, the plug-in converts the new contents edited by the third-party software into a format conforming to the docbase standard and adds the converted new contents into the original document opened.

In this step, when the document is saved, the new contents edited by the third-party software may be converted using the virtual printing technique into contents in the format of the original document. Then the converted contents are saved into the original document to form a new document conforming to the docbase standard (referred to as new document hereinafter for short).

The virtual printing technique is a technique for generating a document through a virtual printing interface. Since the technique can obtain document information without parsing the format of the document, it supports all kinds of formats that can be printed. A high-quality virtual printer functions like a real printer. Software can select it as the printer for printing a document and carry out the print operation. The difference relies in that the virtual printer does not need hardware support, and the printing generates a document. This technique is widely used and will not be described further herein.

In practice, the third-party software may trigger the plug-in to save the edited new contents as a new UOML document by using the virtual printing technique. Then the plug-in merges the new UOML document and the original UOML document utilizing a UOML interface according to position relationships between the edited new contents and objects converted from the original UOML document. In particular, the plug-in may invoke a printing function of the third-party software to parse the edited new contents and generate data for printing. Herein, each page of the new contents can be a unit of the data for printing. If there are new contents on a page, the data for printing on this page is the new contents. If a page does not have new contents, the printed page is a blank page. The plug-in inputs the data generated for printing into a pre-configured virtual printer. The virtual printer invokes a UOML standard interface for generating the UOML document according to the data for printing and generates the new UOML document. Finally, the newly generated UOML document is merged with the original UOML document. During the combination, it is determined that whether there is a page in the original UOML document corresponding to the page having the edited new contents in the newly generated UOML document. If there is, the corresponding pages in the two documents will be merged into one page, e.g., the page in the newly generated UOML document is saved as a layer of the corresponding page in the original UOML document. If a new page number is added in the newly generated UOML document, the page will be taken as a new page in the merged document. When the contents in the corresponding pages are merged, if the page in the newly generated UOML document is a blank page, i.e. there are no newly edited contents on this page, the page in the original UOML document will be taken as the corresponding page in the merged document. If there are data contents on the page of the newly generated document, i.e. there are newly edited contents on this page, the page in the newly edited document will be taken as a new layer of the corresponding page in the original UOML document. As such, the UOML document generated contains both the contents of the original UOML document and the edited new contents.

Alternatively, the edited new contents may be directly converted into document contents in UOML format utilizing the virtual printing technique. Based on the original UOML document, the new contents are inserted in corresponding position of the original UOML document. In particular, the third-party software parses the edited new contents and generates data for printing. Similar to the above, each page takes as a unit of the data for printing. The plug-in inputs the data for printing and information of the original UOML document into a pre-configured virtual printer. Herein, the information of the original UOML document may be a storage path of the original UOML document. The virtual printer obtains contents of the original UOML document according to the received information of the original UOML document, compares the UOML document with the data for printing generated from the edited new contents. If the page number of a page having the edited new contents exists in the original UOML document, it is determined that the user has added contents to the page of the original UOML document. The virtual printer creates a layer for the page in the original UOML document and saves the new contents added to the page in the layer newly created. If the page number of a page having edited new contents does not exist in the original UOML document, it is determined that the user has inserted a new page at the end of the original UOML document and has added certain new contents in the new page. The virtual printer adds a new page at the end of the original UOML document and saves the new contents into the page.

In step 207, the new contents in the interim document or the interim document can be embedded into the original document as a source document in the format of the interim document.

In order to get the new edited contentsin the format of the interim document, the new edited contents can be saved in the format of the interim document. For example, save newly edited contents in an RTF document in the format of the RTF document. Then, the newly edited contents saved in the format of the interim document are embedded into the original document as a source file.

If the document is saved in this manner, next time when opening the UOML document, the third-party software can directly obtain the source file saved in the UOML document without the conversion again. The source file in the interim format can be directly displayed, while other contents in the UOML document will be converted and displayed according to the method described in steps 201 to 204.

Generally, when the edited UOML document is opened and displayed, the source file saved last time, in the format of the interim document (e.g. the RTF format), is obtained from the UOML document. Other contents of the UOML document except the source file are converted, and then an interim document, is formed and merged with the source file. The third-party software opens the merged document and displays the merged contents. During this procedure, the documents merged for opening and displaying may be interim documents generated after latest N times of edit and the original document before the N times of edit.

Besides the above opening manner, next time when opening the edited UOML document, the third-party software may open all contents of the UOML document edited in step 205 following the manner described in steps 201-204.

The foregoing descriptions are only preferred embodiments of this invention and are not for use in limiting the protection scope thereof. Any changes and modifications can be made by those skilled in the art without departing from the scope of this invention and therefore should be covered within the protection scope as set by the appended claims.

## Claims

1. A method for processing a document conforming to a docbase standard, comprising:
obtaining contents of a document conforming to a docbase standard via a docbase standard interface;
generating an interim document based on the contents of the document; and
providing the interim document for a third-party software for displaying;
wherein the interim document is in a format supported by the third-party software.

2. The method of claim 1, wherein generating the interim document based on the contents of the document comprises: storing the contents of the document into the interim document as at least one embedded object; or converting the contents of the document into at least one image and saving the at least one image into the interim document;
wherein the method further comprises:
invoking, by the third-party software, a presence software to parse and display the at least one embedded object in the interim document when displaying contents of the interim document; or
displaying, by the third-party software, the at least one image in the interim document directly when displaying contents of the interim document.

3. The method of claim 2, wherein saving the contents of the document into the interim document as at least one embedded object comprises:
saving position information of the contents of the document into the at least one embedded object;
wherein the method further comprises:
obtaining, by the presence software when parsing and displaying the at least one embedded object in the interim document, data of the contents of the document according to position information stored in the at least one embedded object, parsing and displaying the data; or
saving data of the contents of the document or data of compressed contents of the document into the at least one embedded object;
wherein the method further comprises:
obtaining, by the presence software when parsing and displaying the at least one embedded object in the interim document, the data of the contents of the document stored in the at least one embedded object, parsing and displaying the data ; or
obtaining, by the presence software when parsing and displaying the at least one embedded object in the interim document, the data of the compressed contents of the document stored in the at least one embedded object, de-compressing the data, parsing and displaying the de-compressed data.

4. The method of claim 2 or 3, wherein the embedded object is an Object Linking and Embedding (OLE) object in a Windows platform, or a KPART object in a Kool Desktop Environment (KDE) platform, or a BABOON object under a GNU Network Object Model Environment (Gnome) platform.

5. The method of claim 2, wherein converting the contents of the document into at least one image and storing the at least one image into the interim document comprises: obtaining layout information of the contents of the document via a docbase standard interface, saving the layout information as the at least one image, and storing the at least one image in the interim document;
wherein the method further comprises: painting, by the third-party software when displaying the contents of the interim document, the at least one image in the interim document.

6. The method of claim 1 or 2, wherein generating the interim document based on the contents of the document comprises: generating the interim document based on the contents of the document with each page of the document being a unit of the interim document.

7. The method of any of claims 1 to 6, wherein the format of the interim document is one of: Rich Text Format (RTF), Open Document Format (ODF), OpenXML, and Unified Office document Format (UOF).

8. The method of any of claims 1 to 7, further comprising:
setting the generated interim document as modification prohibited and/or deletion prohibited.

9. The method of claim 2 or 3, further comprising:
setting an attribute of the at least one embedded object or the at least one image in the interim document as locked.

10. The method of any of claims 1 to 9, further comprising:
merging, by the third-party software after editing the interim document, edited contents into the document via a docbase standard interface.

11. The method of claim 10, wherein merging the newly edited contents into the document comprises:
creating a new layer of the document for the edited contents, and saving the newly edited contents into the newly created layer by virtual printing; or
converting the newly edited contents into a new document conforming to the docbase standard through virtual printing, and merging the new document with the document.

12. The method of claim 11, wherein combining the new document with the document comprises:
when there is a page in the document corresponding to a page in the new document, saving the page of the new document as a new layer of the corresponding page of the document;
when there is not any page in the document corresponding to a page in the new document, saving the page of the new document as a new page of the document.

13. The method of claim 10, further comprising:
embedding the interim document edited into the document; or
embedding the newly edited contents of the edited interim document into the document in a format of the interim document.

14. The method of claim 13, further comprising:
obtaining the interim document embedded into the document and providing the interim document for the third-party software for displaying; or
obtaining the contents of the document and the newly edited contents saved in the document, generating a second interim document in a format supported by the third-party software based on the contents of the document, merging the second document with the newly edited contents into the second interim document, and providing the second interim document to the third-party software for displaying.

15. The method of any of claims 1 to 14, wherein generating the interim document based on the contents of the document comprises:
generating the interim document based on contents in at least one layer or an edition of the document.

16. The method of claim 15, wherein the at least one layer or the edition is selected by a user according to layer information or edition information of the document.

17. The method of any of claims 1 to 16, wherein the docbase standard is a Unstructured Operation Markup Language (UOML) standard.

18. An apparatus for processing a document conforming to a docbase standard, comprising:
a first module, adapted to obtain contents of a document conforming to a docbase standard via a docbase standard interface;
a second module, adapted to generate an interim document based on the contents of the document; and
a third document, adapted to provide the interim document for a third-party software for display,
wherein the interim document is in a format supported by the third-party software.

19. The apparatus of claim 18, wherein the second module is further adapted to save the contents of the document into the interim document as at least one embedded object; or adapted to convert the contents of the document into at least one image and store the at least one image into the interim document.

20. The apparatus of claim 18 or 19, wherein the second module is further adapted to set the interim document as modification prohibited and/or deletion prohibited.

21. The apparatus of claim 18, further comprising:
a fourth module, adapted to merge, after the interim document is edited by the third-party software, newly edited contents into the document by invoking the docbase standard interface.

22. The apparatus of claim 21, wherein the fourth module comprises:
a first unit, adapted to create a new layer in the document for the newly edited contents, and save the newly edited contents into the newly created layer by virtual printing.

23. The apparatus of claim 21, wherein the fourth module comprises:
a second unit, adapted to convert the newly edited contents into a new document conforming to the docbase standard by virtual printing, store a page of the new document as a layer of a page of the document corresponding to the page of the new document if there is a page in the document corresponding to the page in the new document, and store the page of the new document as a new page in the document if there is no page in the document corresponding to the page of the new document.

24. The apparatus of claim 21 or 22, further comprising:
a fifth module, adapted to embed, the edited interim document into the document, or adapted to save the edited contents in the edited interim document into the document in a format of the interim document.

25. The apparatus of any of claim 17 to 24, wherein the second module is adapted to generate the interim document based on contents of at least one layer or an edition of the document.

26. The apparatus of claim 25, wherein the at least one layer or the edition is selected by a user based on layer information or edition information of the document.

27. The apparatus of any of claims 17 to 26, wherein the apparatus is a plug-in pre-configured in the third-party software or a set of software independent of the third-party software.
